# EUROPÄISCHE PATENTANMELDUNG

(11) **EP 4 517 283 A1**
(43) Veröffentlichungstag der Anmeldung: **05.03.2025**
(21) Anmeldenummer: 23194252.5
(22) Anmeldetag: 30.08.2023
(51) Int. Cl.: G01J 3/02, G01J 3/12

(54) **OPTISCHE FILTERANORDNUNG MIT KONTINUIERLICH INTENSITÄTSEINSTELLBAREM TRANSMISSIONSSPEKTRUM UND ENTSPRECHENDES MESSGERÄT**

(71) Anmelder: Siemens Aktiengesellschaft, 80333 München (DE)
(72) Erfinder: Harr, Konstantin, 76133 Karlsruhe (DE); Heffels, Camiel, 76297 Stutensee-Büchig (DE)
(74) Vertreter: Siemens Patent Attorneys

(57) **Zusammenfassung**

Die Erfindung betrifft eine optische Filteranordnung (30) zum Filtern eines einfallenden Strahlenbündels (15). Die optische Filteranordnung (30) umfasst ein Filter (10), das als ein über einem Spektrum variables Bandpassfilter ausgebildet ist, und das mit zumindest einem Verschattungsmittel (31) ausgestattet ist. Erfindungsgemäß ist das Verschattungsmittel (31) zu einem Einstellen eines Gesamttransmissionsspektrums (20) des Filters (10) ausgebildet. Hierzu ist das Verschattungsmittel (31) dazu ausgebildet, zumindest einen Abschnitt des Filters (10) vorgebbar optisch zu verschatten und/oder intransparent zu schalten. Weiter betrifft die Erfindung ein Verfahren (100) zum Ermitteln einer physikalischen oder chemischen Größe einer Stoffprobe (16), die unter Verwendung einer derartigen optischen Filteranordnung (30) untersucht wird und ein entsprechendes Computerprogrammprodukt (60). Ebenso betrifft die Erfindung ein Messgerät (70), das mit einer solchen optischen Filteranordnung (30) ausgestattet ist. Ferner betrifft die Erfindung ein Simulationsverfahren (200) zum Nachstellen eines Betriebsverhaltens einer entsprechenden optischen Filteranordnung (30) und ein korrespondierendes Simulationsprogrammprodukt (70).

## Beschreibung

Die Erfindung betrifft eine optische Filteranordnung, durch die ein Transmissionsspektrum kontinuierlich intensitätseinstellbar ist. Ebenso betrifft die Erfindung ein Messgerät mit einer solchen optischen Filteranordnung. Weiter betrifft die Erfindung ein Verfahren zum Ermitteln einer physikalischen oder chemischen Größe einer Stoffprobe und ein dazu eingerichtetes Computerprogrammprodukt. Ferner betrifft die Erfindung ein Simulationsverfahren für eine derartige optische Filteranordnung und ein korrespondierendes Simulationsprogrammprodukt.

Aus der Europäischen Patentanmeldung EP 0 205 050 A2 ist ein Photometer für ein simultanes Messen mehrerer Wellenlängen bekannt. Das Photometer weist einen zirkulär veränderlichen Filter auf, an dem schwenkbar Radialarme befestigt sind. An Endbereichen der Radialarme sind gegenüberliegend Lichtleitfasern angebracht. Aus einer Lichtleitfaser emittiertes Licht durchläuft den zirkulär veränderlichen Filter und erreicht die gegenüberliegende Lichtleitfaser. Darüber wird das Licht einem Erfassungsmittel zugeführt. Über ein Einstellen der Positionen der Radialarme ist eine Mehrzahl an Wellenlängen gleichzeitig erfassbar.

Messgeräte wie Photometer werden in einer Vielzahl an Anwendungen in der Analytik eingesetzt. Es besteht die Zielsetzung, physikalische oder chemische Eigenschaft einer Stoffprobe oder die Zusammensetzung zunehmend komplexer Stoffproben schnell und präzise zu erfassen. Unter anderem wird angestrebt, eine erhöhte Anzahl an Stoffproben-Komponenten gleichzeitig zu erfassen. Weiter besteht die Zielsetzung, dass entsprechende Photometer kompakt, einfach und kosteneffizient sein sollen. Der Erfindung liegt die Aufgabenstellung zugrunde eine Möglichkeit bereitzustellen, die in zumindest einem der skizzierten Aspekte eine Verbesserung bietet.

Die Aufgabenstellung wird durch eine erfindungsgemäße optische Filteranordnung gelöst, die dazu ausgebildet ist, ein einfallendes Strahlenbündel zu filtern. Das Strahlenbündel kann in einer Messzelle erzeugt werden, in der eine Stoffprobe bestrahlt wird und infolgedessen die einfallende Strahlung von der Stoffprobe beispielsweise inelastisch gestreut und/oder absorbiert wird. Dadurch wird aus der Messzelle das von der optischen Filteranordnung zu filternde Strahlenbündel emittiert. Die optische Filteranordnung umfasst ein Filter, das als ein über ein Spektrum variables Bandpassfilter ausgebildet ist. Das Filter ist dadurch in Abhängigkeit einer Position auf dem Filter in unterschiedlichen Wellenlängen-Intervallen, also Teilspektren, für das Strahlenbündel transparent. Das Filter kann abschnittsweise für ein bestimmtes Teilspektrum transparent sein, also ein entsprechendes Teiltransmissionsspektrum aufweisen. Die Teiltransmissionsspektren, die an unterschiedlichen Positionen auf dem Filter vorliegen, wiederum bilden kombiniert ein Gesamttransmissionsspektrum. Die optische Filteranordnung umfasst ferner ein Verschattungsmittel. Das Verschattungsmittel kann, entlang eines Strahlengangs des Strahlenbündels betrachtet, vor oder hinter dem Filter angeordnet sein. Das Verschattungsmittel ist erfindungsgemäß dazu ausgebildet, das Gesamttransmissionsspektrum des Filters in vorgebbare Weise, beispielsweise in puncto Intensität, einzustellen. Weiter ist das Verschattungsmittel dazu ausgebildet, an einer vorgebbaren Position und/oder einem vorgebbaren Abschnitt zu verschatten und/oder intransparent zu schalten.

Dementsprechend ist das Gesamttransmissionsspektrum des Filters, und damit der optischen Filteranordnung, für einen Messbetrieb, beispielsweise in einem Photometer, exakt einstellbar. Das Gesamttransmissionsspektrum ist unter anderem an einen Detektor anpassbar, der dazu ausgebildet ist, das Gesamttransmissionsspektrum zu empfangen und zu erfassen.

Dadurch ist beispielsweise in einem Teiltransmissionsspektrum die vorliegende Intensität so weit reduzierbar, dass der Detektor dadurch nicht übersättigt wird. Folglich ist das technische Potential eines Detektors weit ausschöpfbar und über ein breites Spektrum eine erhöhte Messgenauigkeit erzielbar. Ebenso ist der Einsatz von mehreren Detektoren vermeidbar, die auf einen Messbetrieb in unterschiedlichen Intensitätsbereichen eingerichtet sind. Der Detektor kann beispielsweise als ein Einzelelementdetektor ausgebildet sein. Die optische Filteranordnung erlaubt es damit, ein zugehöriges Messgerät, beispielsweise ein Photometer, kompakt, einfach und kosteneffizient herzustellen. Ebenso ist die optische Filteranordnung selbst in einfacher Weise herstellbar.

In einer Ausführungsform der beanspruchten optischen Filteranordnung ist das Verschattungsmittel als eine bewegliche Abdeckfläche ausgebildet, die im Strahlengang des Strahlenbündels vorgebbar positionierbar ist. Dementsprechend kann das Verschattungsmittel, entlang einer Ausbreitungsrichtung des Strahlenbündels, vor oder hinter dem Filter angeordnet sein. Das Verschattungsmittel kann beispielsweise als Paneel ausgebildet sein, das dazu ausgebildet ist, einen vorgebbaren Abschnitt des Filters zumindest teilweise zu verdecken. Die Abdeckfläche kann beispielsweise durch ein Antriebsmittel vorgebbar positioniert werden und/oder bei einer Montage der optischen Filteranordnung arretierbar ausgebildet sein. Der vom Verschattungsmittel verschattete Abschnitt des Filters ist dadurch mit erhöhter Präzision einstellbar. Dementsprechend ist im korrespondierenden Teiltransmissionsspektrum dessen Intensität exakt einstellbar. Weiter sind derartige Verschattungsmittel in einfacher Weise herstellbar und handhabbar. Das Verschattungsmittel kann kippbar ausgebildet sein. Dadurch ist eine Größe des vom Verschattungsmittel verschatteten Abschnitts vorgebbar. Durch Kippen des Verschattungsmittels, das als Paneel ausgebildet sein kann, ist die Größe des verschatteten Abschnitts mit erhöhter Präzision kontinuierlich einstellbar. Die Präzision, mit der die Größe des verschatteten Abschnitts einstellbar ist, ist im Wesentlichen durch die Positioniergenauigkeit begrenzt, die beim Kippen des Verschattungsmit erzielbar ist. Weiter alternativ kann das Verschattungsmittel als Spiegel ausgebildet sein. Dadurch ist beispielsweise ein vorgebbares Teilspektrum an einen anderen Detektor umlenkbar. Der Spiegel kann insbesondere als Mikrospiegel oder als Mikrospiegelarray ausgebildet sein. Dadurch ist die beanspruchte optische Filteranordnung an eine breite Spanne an Anwendungsfällen anpassbar. Ferner kann die beanspruchte optische Filteranordnung eine Mehrzahl an Verschattungsmitteln aufweisen, die jeweils gemäß einer der oben skizzierten Ausführungsformen ausgebildet sein können. Folglich sind unterschiedliche Arten von Verschattungsmitteln kombinierbar, wodurch die Vielseitigkeit der beanspruchten optischen Filteranordnung weiter gesteigert wird.

Darüber hinaus kann das Verschattungsmittel als Display ausgebildet sein, das eine Mehrzahl an Pixeln aufweist. Ein solches Display kann beispielsweise ein Flüssigkristall-Display, auch LCD genannt, sein. Zumindest eines der Pixel jeweils vorgebbar transparent oder intransparent schaltbar sein. Das Display selbst kann in einem Grundzustand transparent ausgebildet sein und zumindest ein Pixel umfassen, das intransparent stellbar ist. Das Display kann somit pixelweise transparent bzw. intransparent geschaltet werden. Alternativ kann das Display in einem Grundzustand intransparent sein und zumindest ein Pixel umfassen, das vorgebbar transparent schaltbar ist. Weiter kann das zumindest eine Pixel gestuft oder kontinuierlich teil-transparent bzw. teil-intransparent schaltbar sein. Folglich ist durch das entsprechende Schalten von zumindest einem Pixel des Displays lokal vorgebbar, welche Intensität zumindest ein Teiltransmissionsspektrum des Filters aufweist bzw. wie die Intensität in dessen Gesamttransmissionsspektrum verteilt ist. Das Display kann somit pixelweise ansteuerbar sein und somit zumindest ein Teiltransmissionsspektrum des Filters in puncto Intensität anpassen. Durch gestuft oder kontinuierlich teil-transparent bzw. teil-intransparent schaltbare Pixel ist die Intensität zumindest eines Teiltransmissionsspektrum des Filters, also ein Transparenzgrad des Filters, noch genauer einstellbar. Weiter ist dadurch vorgebbar, welche Bereiche eines Detektors, der zumindest ein Teiltransmissionsspektrum des Filters empfängt, mit welcher Intensität bestrahlt werden. Dadurch sind beispielsweise auf dem Filter benachbart angeordnete Abschnitte, die für unterschiedliche Spektren transparent sind, auf dem Detektor separierbar. Hierdurch sind Überlagerungen vermeidbar. Ebenso kann der Detektor gegenüber bekannten Detektoren in Photometern eine reduzierte Auflösung aufweisen. Insgesamt wird durch die beanspruchte optische Filteranordnung ein entsprechendes Messgerät weiter vereinfacht und kosteneffizienter gestaltet. Ferner kann das Display gekippt angeordnet sein, so dass das Strahlenbündel in einem Winkel einfällt, der von 90° abweicht. Durch eine solche gekippte Anordnung des Displays ist je Pixel eine verringerte Fläche intransparent, teil-transparent bzw. teil-intransparent stellbar, wodurch die erzielbare Auflösung des Displays erhöht wird. Dementsprechend ist der vom Display zu verschattende Abschnitt exakt einstellbar und die optische Filteranordnung auch für präzisionsorientierte Anwendungen, beispielsweise Labortechnik, geeignet. Das als Display ausgebildete Verschattungsmittel kann entlang der Ausbreitungsrichtung des Strahlenbündels vor oder hinter dem Filter positioniert sein. Des Weiteren kann das als Display ausgebildete Verschattungsmittel auch spaltenweise oder zeilenweise transparent, intransparent, teil-transparent bzw. teil-intransparent geschaltet werden. Eine spaltenweise bzw. zeilenweise Beschaltung der Pixel ist in einfacher Weise implementierbar. Dadurch ist das Verschattungsmittel in einfacher Weise durchstimmbar und unter anderem eine Scan-Funktion im Gesamttransmissionsspektrum des Filters bereitstellbar. Auch hierdurch wird die funktionelle Vielseitigkeit der optischen Filteranordnung gesteigert.

Des Weiteren kann das Filter eine Mehrzahl an Filterelementen umfassen, die umlaufend angeordnet sind, beispielsweise um einen Zentralpunkt. Die Filterelemente können im Wesentlichen keilförmig, kreissegmentförmig oder ringsegmentförmig ausgebildet sein. Jedes der Filterelemente weist ein unterschiedliches Teiltransmissionsspektrum auf. Die Teiltransmissionsspektren benachbarter Filterelemente können hierbei teilweise überlappen. Das Verschattungselement, also die Abdeckfläche, kann hierbei als ein im Wesentlichen keilförmiges Paneel ausgebildet sein. Das keilförmige Paneel kann, beispielsweise bezogen auf den Zentralpunkt, radial beweglich ausgebildet sein. Hierdurch ist ein vom Verschattungsmittel verdeckter oder verschatteter Abschnitt mit erhöhter Präzision einstellbar. Alternativ kann das Filter mit der Mehrzahl an umlaufend angeordneten Filterelementen auch mit einem Display versehen sein, das zumindest ein Pixel umfasst, das vorgebbar transparent bzw. intransparent schaltbar ist. Hierdurch ist insgesamt das Gesamttransmissionsspektrum des Filters mit gesteigerter Genauigkeit einstellbar. Alternativ kann das Filter eine Mehrzahl an Filterelementen umfassen, die im Wesentlichen streifenförmig ausgebildet sind und nebeneinander angeordnet sind. Ein solches Filter kann mit Verschattungsmitteln ausgestattet sein, die als im Wesentlichen rechteckige oder streifenförmige Paneele ausgebildet sind. Derartige Filter und Verschattungsmittel sind in einfacher Weise kosteneffizient herstellbar.

In einer weiteren Ausführungsform der beanspruchten optischen Filteranordnung ist das Filter zumindest abschnittsweise als kontinuierlich variables Bandpassfilter ausgebildet. Dementsprechend verschiebt sich ein transparentes Spektrum des Filters entlang einer Richtung auf der Oberfläche des Filters im entsprechenden Abschnitt kontinuierlich. Das Filter kann durchgängig kontinuierlich als variables Bandpassfilter ausgebildet sein, was die Nutzung eines breiten Spektralbereichs erlaubt. Die optische Filteranordnung ist so für eine breite Spanne an Anwendungsfällen geeignet. Alternativ kann bei einem Filter, das nur abschnittsweise als kontinuierlich variables Bandpassfilter ausgebildet ist, ein nicht verwendeter Spektralbereich ausgeschlossen werden, also übersprungen werden. Das Filter ist so bedarfsgerecht ausbildbar. Das Filter kann beispielsweise als Kombination von mehreren kontinuierlich variablen Bandpassfiltern ausgebildet sein. Das kontinuierlich variable Bandpassfilter kann beispielsweise durch ein Inkjet-Druck-Verfahren hergestellt sein. Beispielweise kann das kontinuierlich variable Bandpassfilter als linearvariables Bandpassfilter oder als zirkularvariables Bandpassfilter ausgebildet sein. Das linearvariable Bandpassfilter kann im Wesentlich rechteckig ausgebildet sein und ein im Wesentlichen entlang einer seiner Kanten variables transparentes Spektrum aufweisen. Korrespondierend dazu kann das zirkularvariable Bandpassfilter im Wesentlichen entlang einer Umlaufrichtung ein variables transparentes Spektrum aufweisen. Derartige kontinuierlich variablen Bandpassfilter erlauben es, zumindest ein angestrebtes Teiltransmissionsspektrum präzise vorzugeben. In Verbindung mit einem Display mit mindestens einem Pixel, das vorgebbar transparent bzw. intransparent schaltbar ist, ist die Genauigkeit, mit der das angestrebte Teiltransmissionsspektrum auswählbar ist, im Wesentlichen durch die Auflösung, also eine Pixelgröße, des Displays beschränkt. Dementsprechend ist die erzielbare Präzision bei der beanspruchten optischen Filteranordnung durch umso höher, je höherauflösend das Display ist. Technische Fortschritte in puncto Auflösung bei Displays sind somit ohne Weiteres auf die beanspruchte optische Filteranordnung übertragbar. Durch Austauschen des Displays gegen ein höherauflösendes Display ist die beanspruchte optische Filteranordnung in einfacher Weise nachrüstbar und verbesserbar. Ferner erlauben es kontinuierlich variable Bandpassfilter, in einfacher Weise, transparente und intransparente Abschnitt des Filters zu separieren, und dadurch an einem Detektor trennscharfe Teilspektren zu empfangen.

Ferner kann die beanspruchte optische Filteranordnung mit einem Polarisationsfilter versehen sein. Der Polarisationsfilter kann im Strahlengang des Strahlenbündels positioniert sein, also vor oder hinter dem Filter. Da ein als Display, insbesondere als LCD, ausgebildetes Verschattungsmittel, selbst als Polarisationsfilter wirkt, ist mit dem Polarisationsfilter eine Gesamtintensität des Gesamttransmissionsspektrums weiter einstellbar. Dadurch wird an einem Detektor, der zumindest das Teiltransmissionsspektrum der optischen Filteranordnung empfängt, die Unterscheidungsschärfe von unterschiedlichen Teiltransmissionsspektren weiter erhöht.

Die eingangs beschriebene Aufgabe wird ebenso durch ein erfindungsgemäßes Verfahren zum Ermitteln einer physikalischen oder chemischen Größe einer Stoffprobe gelöst. Die physikalische oder chemische Größe kann beispielsweise eine Dichte der Stoffprobe, ihr Brennwert, ihr Wobbe-Index, ihr struktureller Aufbau, eine Größe zu einem lichtinduzierten Abbau zumindest einer Komponente der Stoffprobe, eine Größe zu einem Ablauf einer chemischen Reaktion der Stoffprobe oder ein Gemischverhältnis sein. Das Verfahren wird unter Einsatz einer optischen Filteranordnung durchgeführt und umfasst einen ersten Schritt, in dem die Stoffprobe mit einer Lichtquelle bestrahlt wird. Die Lichtquelle kann beispielsweise ein Laser sein. Durch das Bestrahlen wird im ersten Schritt ein Strahlenbündel erzeugt, das durch die Stoffprobe emittiert wird. Weiter umfasst das Verfahren einen zweiten Schritt, in dem eine Soll-Intensität für zumindest ein Teilspektrum des Strahlenbündels vorgegeben wird. Das Vorgeben kann durch einen Benutzer und/oder eine Computerprogrammprodukt erfolgen, mit dem die physikalische oder chemische Größe zu ermitteln ist. Das Computerprogrammprodukt kann hierzu eine Künstliche Intelligenz umfassen. Ferner wird im zweiten Schritt ein Schaltsignal an zumindest ein Pixel ausgegeben, durch das dessen Transparenzgrad vorgegeben wird, also zumindest ein Teiltransmissionsspektrum eines Filters der optischen Filteranordnung in puncto Intensität eingestellt wird. Der Schaltbefehl kann basierend auf der Soll-Intensität für das Teilspektrum des Strahlenbündels ermittelt werden.

Weiter gehört ein dritter Schritt zum beanspruchten Verfahren, in dem zumindest ein Teiltransmissionsspektrum des Filters erfasst wird, der zumindest teilweise mit dem Teilspektrum des Strahlenbündels gemäß dem zweiten Schritt überlappt. Das Erfassen des Teiltransmissionsspektrums kann hierbei mittels eines Detektors erfolgen, der hinter der optischen Filteranordnung angeordnet sein kann. Dadurch wird insgesamt die Intensität des erfassten, also beispielsweise vom Detektor empfangenen, Teiltransmissionsspektrums vorgegeben. In einem vierten Schritt wird anhand des Teiltransmissionsspektrums, das im dritten Schritt erfasst wird, die physikalische oder chemische Größe der Stoffprobe ermittelt. Das erfindungsgemäße Verfahren bieten einen erhöhten Grad an Messgenauigkeit und ist im Wesentlichen verzögerungsfrei umsetzbar. Die zu ermittelnde physikalische oder chemische Größe ist durch Erfassen des Strahlenbündels ermittelbar, das sich im Wesentlichen mit Lichtgeschwindigkeit ausbreitet. Die Geschwindigkeit, mit der die physikalische oder chemische Größe ermittelt wird, ist höchstens durch die Reaktionsgeschwindigkeiten der optischen Filteranordnung und ihres zugeordneten Detektors und die Rechengeschwindigkeit einer zugehörigen Auswertungseinheit begrenzt. Dementsprechend bietet das beanspruchte Verfahren eine gesteigerte Sampling-Rate, die durch künftige Fortschritte in puncto Rechenleistung und Pixelansteuergeschwindigkeit noch weiter steigerbar ist. Ferner kommt das beanspruchte Verfahren mit einer reduzierten Anzahl an Detektoren aus und kann beispielsweise mit nur genau einem Detektor durchgeführt werden. Dadurch ist auch die Verwendung eines kostenintensiven Einzelelementdetektors als Detektor effizient und platzsparend.

Das beanspruchte Verfahren kann beispielsweise mittels einer optischen Filteranordnung gemäß einer der oben dargestellten Ausführungsformen ausgebildet sein. Die technischen Vorzüge der korrespondierenden optischen Filteranordnung liegen somit auch im beanspruchten Verfahren vor. Die Merkmale der beanspruchten optischen Filteranordnung sind einzeln und in Kombination auf das beanspruchte Verfahren übertragbar.

In einer weiteren Ausführungsform des beanspruchten Verfahrens kann das zumindest eine Pixel des Displays mit einer vorgebbaren Taktung im zweiten Schritt geschaltet werden. Beispielsweise kann das zumindest eine Pixel getaktet abwechselnd transparent und intransparent geschaltet werden. Das zumindest eine Pixel kann hierbei beispielsweise anhand einer Pulsweitenmodulation getaktet geschaltet werden. Alternativ oder ergänzend kann das zumindest eine Pixel getaktet gestuft oder kontinuierlich zwischen unterschiedlichen Transparenzgraden umgeschaltet werden. Durch eine getaktete Ansteuerung des zumindest einen Pixels ist zumindest ein Teiltransmissionsspektrum des Filters in puncto Intensität noch feiner vorgebbar einstellbar. Ferner können Pixel des Displays derart vorgebbar transparent bzw. intransparent geschaltet werden, dass vorgebbare Teiltransmissionsspektren erzeugt werden. Dementsprechend ist eine gezielte serielle Erfassung von unterschiedlichen physikalischen oder chemischen Größen und/oder unterschiedlicher Komponenten der Stoffprobe möglich. Dementsprechend bietet das beanspruchte Verfahren einen erhöhten Grad an Flexibilität und ist an eine Vielzahl an unterschiedlichen Messmethoden anpassbar. Das beanspruchte Verfahren ist insbesondere in vorhandenen Messgeräten, beispielsweise Photometern, nachrüstbar.

Des Weiteren kann das beanspruchte Verfahren umfassen, dass eine Mehrzahl an Pixeln zeilenweise oder spaltenweise vorgebbar intransparent, transparent, teil-transparent oder teil-intransparent geschaltet werden. Dadurch wird ein beweglicher Suchbereich bereitgestellt. Insbesondere kann hierzu zumindest eine Zeile und/oder Spalte von Pixeln durchgängig zumindest teiltransparent geschaltet werden. Gleichzeitig können Pixel außerhalb des Suchbereichs intransparent geschaltet werden. Der Suchbereich ist vorgebbar über das Display, und damit über das Filter, beweglich. Dadurch ist die optische Filteranordnung durchstimmbar ausgebildet, also ein Spektral-Sweep verwirklicht. Dadurch wird das Funktionsspektrum eines Messgeräts mit einer entsprechenden optischen Filteranordnung erweitert.

Darüber hinaus können der zweite, dritte und vierte Schritt des beanspruchten Verfahrens für eine Mehrzahl an Teilspektren mit je einer Soll-Intensität durchgeführt werden. Dementsprechend ist eine Mehrzahl an Teiltransmissionsspektren des Filters gezielt vorgebbar, anhand derer einzeln oder in Kombination mit einem anderen Teiltransmissionsspektrum eine physikalische oder chemische Größe der Stoffprobe ermittelbar. Alternativ oder ergänzend ist so die Zusammensetzung der Stoffprobe präzise ermittelbar, beispielsweise durch im Wesentlichen gleichzeitiges Ermitteln von Konzentrationen unterschiedlicher Komponenten. Insgesamt ist mit dem beanspruchten Verfahren eine Mehrzahl an physikalischen oder chemischen Größen der Stoffprobe parallel ermittelbar bzw. eine Zusammensetzung einer komplex zusammengesetzte Stoffprobe schnell ermittelbar. Das beanspruchte Verfahren ist in seiner so erzielten Vielseitigkeit im Wesentlichen nur durch die Pixelansteuergeschwindigkeit, das Auslösungsvermögen des eingesetzten Detektors und die Rechenleistung einer zugehörigen Auswertungseinheit beschränkt. Weiter sind Teiltransmissionsspektren, die für die angestrebte Ermittlung der physikalischen oder chemischen Größe unwesentlich sind, vollständig verschattbar, und damit aus einer weiteren rechnerischen Auswertung ausblendbar. Dementsprechend fallen in diesen Teilspektren höchstens minimale Daten an. Das beanspruchte Verfahren ist somit in besonderem Maß datenökonomisch, was eine schnelle rechnerische Verarbeitung weiter erleichtert.

Die zugrunde liegende Aufgabenstellung wird gleichermaßen durch ein erfindungsgemäßes Computerprogramprodukt gelöst, das zum Ansteuern einer optischen Filteranordnung ausgebildet ist, die ein Filter umfasst. Das Computerprogrammprodukt ist dazu ausgebildet, Steuersignale zum Betätigen eines Verschattungsmittels der optischen Filteranordnung auszugeben. Das Verschattungsmittel ist hierbei im Strahlengang der optischen Filteranordnung angeordnet, also vor oder hinter einem Filter der optischen Filteranordnung. Erfindungsgemäß ist das Computerprogrammprodukt dazu ausgebildet, ein Verfahren nach zumindest einer der oben skizzierten Ausführungsformen durchzuführen. Das Computerprogrammprodukt kann ferner dazu ausgebildet sein, Messsignale von zumindest einem Detektor zu empfangen und auszuwerten, der dazu ausgebildet und angeordnet ist, zumindest ein Teiltransmissionsspektrum der optischen Filteranordnung zu empfangen. Das Computerprogrammprodukt kann ferner zumindest teilweise auf einer Auswertungseinheit, die mit dem Detektor mittelbar oder unmittelbar gekoppelt ist und auch als Steuereinheit für die optische Filteranordnung dient, ausführbar gespeichert sein. Ferner kann das Computerprogrammprodukt als Software ausgebildet sein, festverdrahtet, also als Chip, Integrierte Schaltung oder FPGA, oder als Kombination hieraus. Weiter kann das Computerprogrammprodukt monolithisch ausgebildet sein, also auf einer einzigen Hardwareplattform ausführbar sein. Alternativ kann das Computerprogrammprodukt modular ausgebildet sein, also eine Mehrzahl an Teilprogrammen umfassen, die über eine kommunikative Datenverbindung zusammenwirken und dadurch seien Funktionalität verwirklichen.

Ferner wird die oben beschriebene Aufgabe durch ein erfindungsgemäßes Messgerät gelöst, das einen Detektor und eine optische Filteranordnung umfasst. Die optische Filteranordnung und der Detektor sind mit einer Auswertungseinheit gekoppelt. Die Auswertungseinheit kann hierbei als einzelnes Gerät ausgebildet sein oder als eine Mehrzahl an Geräten, die zusammenwirken. Die Auswertungseinheit ist erfindungsgemäß dazu ausgebildet, zumindest ein Verfahren nach einer der oben dargestellten Ausführungsformen durchzuführen. Alternativ oder ergänzend ist die Auswertungseinheit mit einem Computerprogrammprodukt ausgestattet, das gemäß einer der oben skizzierten Ausführungsformen ausgebildet ist. Die Auswertungseinheit kann dabei auch als Steuereinheit zum Betätigen der optischen Filteranordnung ausgebildet sein. Weiter alternativ oder ergänzend kann die optische Filteranordnung gemäß einer der oben dargelegten Ausführungsformen ausgebildet sein. Das Messgerät kann ferner beispielsweise als Photometer, insbesondere als Raman-Photometer ausgebildet sein. Ein derartiges Messgerät erlaubt es, eine Mehrzahl an physikalischen oder chemischen Größen einer Stoffprobe zu ermitteln und/oder eine Zusammensetzung der Stoffprobe aus einer Vielzahl an Komponenten schnell zu ermitteln. Die Merkmale der oben beschriebenen optischen Filteranordnung, des Verfahrens und des Computerprogrammprodukt sind einzeln oder in Kombination auf das beanspruchte Messgerät übertragbar.

Ebenso wird die oben dargestellte Aufgabenstellung durch ein erfindungsgemäßes Verfahren zum Simulieren eines Betriebsverhaltens einer optischen Filteranordnung gelöst. Das Betriebsverhalten kann hierbei ein Ermitteln eines Teiltransmissionsspektrums und/oder eines Gesamttransmissionsspektrums der optischen Filteranordnung umfassen. Das Betriebsverhalten kann hierbei unter vorgebbaren Betriebsparametern nachgestellt werden. Das Verfahren umfasst einen ersten Schritt, in dem ein Datensatz bereitgestellt wird, der zumindest teilweise eine Funktionsweise zumindest eines Abschnitts der zu simulierenden optischen Filteranordnung nachstellt. Das Datensatz kann ein Modell der optischen Filteranordnung umfassen, durch das deren Aufbau zumindest teilweise abgebildet ist. Alternativ oder ergänzend kann der Datensatz auch als Rechenmodell ausgebildet sein, durch das die Funktionsweise der optischen Filteranordnung nachgebildet wird. Unter der Funktionsweise ist hierbei jegliche Wechselwirkung der optischen Filteranordnung mit einem darauf einfallenden Strahlenbündel, und dementsprechend einer virtuellen Repräsentanz eines solchen Strahlenbündels, zu verstehen. Weiter umfasst das Verfahren einen zweiten Schritt, in dem zumindest ein Betriebsparameter vorgegeben wird, durch den das zu simulierende Betriebsverhalten definiert ist. Der Betriebsparameter umfasst beispielsweise eine Zusammensetzung der Stoffprobe, ein Teilspektrum oder ein Gesamtspektrum des Strahlenbündels, dessen Intensität, ein Kollimationsgrad des Strahlenbündels, ein Auflösungsvermögen eines Detektors, ein Schaltverhalten zumindest eines Pixels und/oder eine Position eines Verschattungsmittels, insbesondere einer Abdeckfläche. Betriebsparameter kann hierbei im Wesentlichen jegliche Größe sein, die nicht infolge der Bauart der zu simulierenden optischen Filteranordnung unveränderbar ist. Zum Betriebsverhalten kann ein Teiltransmissionsspektrum und/oder ein Gesamtspektrum der optischen Filteranordnung gehören, dass sich einstellt, wenn diese durch das Strahlenbündel bestrahlt wird. Ebenso kann ein Messverhalten eines Detektors zum Betriebsverhalten gehören, der hinter der optischen Filteranordnung positioniert ist.

Des Weiteren umfasst das Verfahren einen dritten Schritt, in dem ein Simulationsprogrammprodukt ausgeführt wird, das dazu ausgebildet ist, anhand des Datensatzes, der im ersten Schritt vorgegeben ist, und des zumindest einen Betriebsparameters, der im zweiten Schritt vorgegeben ist, zumindest einen Leistungsparameter der optischen Filteranordnung zu ermitteln. Der Leistungsparameter kann hierbei im Wesentlichen jegliche Größe sein, durch die das Betriebsverhalten der optischen Filteranordnung quantifizierbar ist. Insbesondere kann eine Intensitätsverteilung in einen Teiltransmissionsspektrum oder im Gesamttransmissionsspektrum der optischen Filteranordnung sein. Ebenso kann eine Lage von Teiltransmissionsspektren auf einem Empfänger des zugehörigen Detektors, beispielsweise einem CCD-Chip oder Photonen-Multiplier, in Form zumindest einen Leistungsparameters abgebildet werden. Ferner gehört ein vierter Schritt zum erfindungsgemäßen Verfahren, in dem der im dritten Schritt ermittelte zumindest eine Leistungsparameter ausgegeben wird. Das Ausgeben erfolgt an einen Benutzer, beispielsweise über eine graphische Benutzeroberfläche, und/oder über eine Datenschnittstelle. Über die Datenschnittstelle ist der zumindest eine Leistungsparameter an andere simulationsgerichtete Computerprogramme übertragbar.

Erfindungsgemäß ist die optische Filteranordnung, die mit dem Verfahren nachgestellt wird, gemäß einer der oben dargestellten Ausführungsformen ausgebildet. Alternativ oder ergänzend ist das Verfahren zum Simulieren der optischen Filteranordnung dazu eingerichtet, ein Betriebsverfahren nach einer der oben skizzierten Ausführungsformen nachzustellen. Das optische Verhalten von Filterelementen, beispielsweise von Bandpassfiltern, ist mit relativ geringem Rechenaufwand präzise nachstellbar. Das Verschattungsverhalten an einem solchen Filterelement bzw. an einem solchen Filter ist im Wesentlichen durch ein geometrisches Auflösungsvermögen bestimmt, das der zugrundeliegende Datensatz aufweist. Die für ein optisches Verhalten relevante Geometrie ist ebenso mit verhältnismäßig geringem Rechenaufwand nachstellbar. Insbesondere kann der Datensatz ein im Wesentlichen ebenes, also zweidimensionales, Modell des Filters mit seinen Filterelementen umfassen, der mit einer Rasterung versehen ist und so das über die Rasterung vorgebbar verschattbar ist bzw. intransparent gestellt werden kann. Die Erfindung beruht unter anderem auf der überraschenden Erkenntnis, dass die zugrundeliegende optische Filteranordnung aufgrund ihres Aufbaus besonders simulationsfreundlich ist. Dementsprechend ist der Betrieb der optischen Filteranordnung schnell und gleichzeitig präzise nachstellbar. Das beanspruchte Verfahren kann dazu ausgebildet sein, den Betrieb einer entsprechenden optischen Filteranordnung zu überwachen. Dazu kann beispielsweise ein im dritten Schritt ermittelter Leistungsparameter mit einem korrespondierenden Messwert des Detektors verglichen werden und so auf Plausibilität geprüft werden. Dadurch, dass das beanspruchte Verfahren auch auf Hardwareplattformen mit relativ geringer Rechenleistung schnell ausführbar ist, ist so der Betrieb der optischen Filteranordnung mit verringerter Verzögerung überwachbar. Insbesondere kann das beanspruchte Verfahren zu einer Echtzeit-Überwachung der optischen Filteranordnung verwendet werden. Des Weiteren kann ein beabsichtigter Betrieb der optischen Filteranordnung so per Simulation schnell erprobt und optimiert werden. Insgesamt ist mit dem beanspruchten Verfahren zum Simulieren im Betrieb der zugehörigen optischen Filteranordnung eine beschleunigte Fehlererkennung möglich und/oder das technische Potential der optischen Filteranordnung in einfacher Weise stärker ausschöpfbar. Die Merkmale der zugrundeliegenden Filteranordnung und des zugrundeliegenden Betriebsverfahrens sind auf das Verfahren zum Simulieren einzeln oder in Kombination ohne Weiteres übertragbar, gelten also auch für deren virtuelle Repräsentanzen darin.

Die eingangs beschriebene Aufgabenstellung wird auch durch ein erfindungsgemäßes Simulationsprogrammprodukt gelöst. Das Simulationsprogrammprodukt ist zu einem Simulieren eines Betriebsverhaltens einer optischen Filteranordnung ausgebildet. Das Simulationsprogrammprodukt kann hierzu als sogenannter Digitaler Zwilling der optischen Filteranordnung ausgebildet sein, beispielsweise als Digitaler Zwilling im Sinne der Anmeldung US 2017/0286572 A1. Der Offenbarungsgehalt von US 2017/0286572 A1 wird durch Verweisung in die vorliegende Anmeldung miteinbezogen. Erfindungsgemäß ist das Simulationsprogrammprodukt dazu ausgebildet, ein Verfahren zum Simulieren eines Betriebsverhaltens gemäß einer der oben skizzierten Ausführungsformen durchzuführen. Dementsprechend sind die Merkmale des zugehörigen Verfahrens zum Simulieren auf das Simulationsprogrammprodukt übertragbar.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Ferner sind die einzelnen Merkmale der in den Figuren gezeigten Ausführungsformen auch untereinander und mit den oben skizzierten Merkmalen kombinierbar. Es zeigen im Einzelnen:
- FIG 1: einen schematischen Aufbau einer ersten Ausführungsform der beanspruchten optischen Filteranordnung und eine Ausführungsform des beanspruchten Simulationsverfahrens;
- FIG 2: einen schematischen Aufbau einer zweiten Ausführungsform der beanspruchten optischen Filteranordnung und eine Ausführungsform des beanspruchten Betriebsverfahrens;
- FIG 3: eine schematischen Schrägansicht einer Komponente einer dritten Ausführungsform der beanspruchten optischen Filteranordnung.

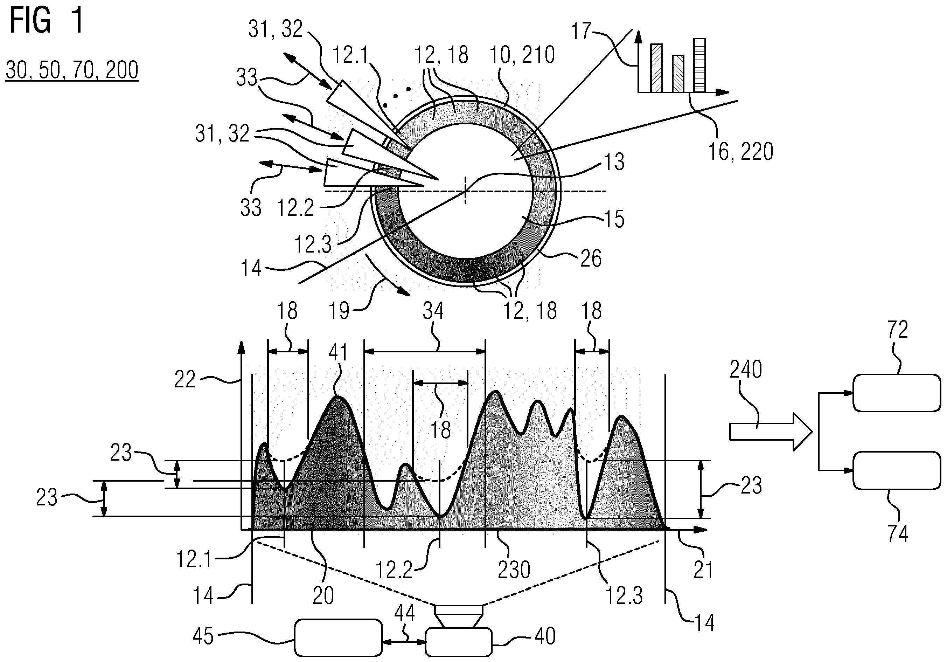

In FIG 1 ist schematisch eine erste Ausführungsform der beanspruchten optischen Filteranordnung 30 gezeigt. Ebenso ist eine Ausführungsform des beanspruchten Verfahrens 200 zum Simulieren, als des Simulationsverfahrens 200, schematisch abgebildet. Die optische Filteranordnung 30 umfasst ein Filter 10, das als ein über ein Spektrum variables Bandpassfilter ausgebildet ist. Das Filter 10 umfasst eine Mehrzahl an Filterelementen 12, die um einen Mittelpunkt 13 herum aneinander anliegend angeordnet sind. Die Filterelemente 12 sind im Wesentlichen kreissegmentförmig ausgebildet und bilden zusammen das kreisförmige Filter 10, das als Segmentfilter 26 aufzufassen ist. Jedes der Filterelemente 12 weist ein Teiltransmissionsspektrum 18 auf, in dem es für eine bestimmte Wellenlänge 21 bzw. einen Wellenlängenbereich transparent ist. Die Teiltransmissionsspektren 18 sind unterschiedlich ausgebildet und bilden kombiniert ein Gesamttransmissionsspektrum 20 des Filters 10. Die Filterelemente 12 sind entlang einer Umlaufrichtung 19 nach ihren Teiltransmissionsspektren 18 sortiert angeordnet. Die Grenzen 14 des Gesamttransmissionsspektrums 20 fallen auf eine gemeinsame Radiallinie des Filters 10. Auf das Filter 10 fällt in einem Messbetrieb ein Strahlenbündel 15 ein, wobei das Strahlenbündel 15 im Wesentlichen kreisförmig ausgebildet ist und auf den Mittelpunkt 13 des Filters 10 zentriert ist.

Das Strahlenbündel 15 wird von einer Stoffprobe 16 emittiert, die eine Zusammensetzung 17 aufweist, die charakteristisch für eine Intensitätsverteilung 41 ist, mit der das Strahlenbündel 15 auf das Filter 10 einfällt. Die Zusammensetzung 17 der Stoffprobe 16 stellt eine physikalische oder chemische Größe dar, die im Messbetrieb der optischen Filteranordnung 30 zu ermitteln ist.

Das Filter 10 ist im Bereich eines ersten Filterelements 12.1, eines zweiten Filterelements 12.2 und eines dritten Filterelements 12.3 jeweils mit einem Verschattungsmittel 31 versehen. Die Verschattungsmittel 31 sind hierbei als Abdeckflächen 32 ausgebildet, die entlang einer Radialrichtung beweglich ist. Eine entsprechende Radialbewegung ist in FIG 1 durch jeweils durch einen Doppelpfeil 33 dargestellt. Die Abdeckflächen 32 sind jeweils im Wesentlichen keilförmig oder kreissegmentförmig ausgebildet. Durch die Radialbewegung 33 ist ein vorgebbarer Anteil des ersten, zweiten bzw. dritten Filterelements 12.1, 12.2, 12.3 verschattbar. Dementsprechend ist beim entsprechenden Filterelement 12.1, 12.2, 12.3 im Bereich dessen Teiltransmissionsspektrums 18 eine Intensität 22 einstellbar. Je weiter die Abdeckfläche 32 in Richtung des Mittelpunkts 13 des Filter 10 bewegt wird, umso stärker ist die Verschattungswirkung und umso geringer ist die Intensität 22 im entsprechenden Teiltransmissionsspektrum 18. Eine Position der Abdeckflächen 32 ist jeweils bei einem Montieren der optischen Filteranordnung 30 vorgebbar. Alternativ können die Abdeckflächen 32 jeweils unabhängig voneinander über ein Antriebsmittel beweglich ausgebildet sein und vor oder während eines Messbetriebs positioniert werden.

Dementsprechend ergibt sich jeweils im Bereich, also einem Wellenlängenbereich, der dem Teiltransmissionsspektrum 18 des ersten, zweiten bzw. dritten Filterelements 12.1, 12.2, 12.3 ein Intensitätsrückgang 23. Der Intensitätsrückgang 23 ist hierbei bezogen auf eine Intensität 22 in diesem Bereich bezogen, die sich bei einem unverschatteten Einfall des Strahlenbündels 15 auf das Filter 10 ergibt. Der Intensitätsrückgang 23 ist umso größer, je weiter das korrespondierende Filterelement 12.1, 12.2, 12.3 durch die Abdeckfläche 32 verschattet ist. In einem Messbetrieb der optischen Filteranordnung 30 wird zumindest ein Teiltransmissionsspektrum 34 des Filters 10, also ein Ausschnitt dessen Gesamttransmissionsspektrums 20, durch einen Detektor 40 erfasst. Durch den Intensitätsrückgang 23 am zweiten Filterelement 12.2 liegt an der korrespondierenden Wellenlänge 21 eine Intensität 22 vor, die vom Detektor 40 ohne Weiteres erfassbar und verarbeitbar ist. Dementsprechend ist die Intensität 22 im Bereich des Teiltransmissionsspektrum 18 des zweiten Filterelements 12.2 derart anpassbar, dass beispielsweise ein Übersteuern bzw. Übersättigen des Detektors 40 vermieden wird. Eine analoge Wirkung wird auch im Bereich der Teiltransmissionsspektren 18 des ersten und dritten Filterelements 12.1, 12.3 erzielt. Das Gesamttransmissionsspektrum 20 des Filters 10 ist folglich mit einem einzigen Detektor 40 erfassbar. Ein Messgerät 50, das mit einer derartigen optischen Filteranordnung 30 versehen ist, erfordert folglich eine reduzierte Anzahl an Detektoren 40 für eine Erfassung des dargestellten Gesamttransmissionsspektrums 20. Ein solches Messgerät 50 ist dadurch einfach, kompakt und kosteneffizient herstellbar. Zum Ermitteln der Zusammensetzung 17 der Stoffprobe 16 ist der Detektor 40 über eine kommunikative Datenverbindung 44 mit einer Auswertungseinheit 45 verbunden.

Mit der dargestellten optischen Filteranordnung 30 ist eine Ausführungsform den beanspruchten Verfahren 200 zum Simulieren dessen Betriebsverhaltens durchführbar. Das Verfahren 200 geht von einem ersten Schritt 210 aus, in dem ein Datensatz bereitgestellt wird, durch den zumindest teilweise die Funktionsweise eines Abschnitts der optischen Filteranordnung 30 nachgestellt wird. Der Datensatz umfasst zumindest eine virtuelle Repräsentanz eines Filterelements 12, 12.1, 12.2, 12.3. Weiter gehört ein zweiter Schritt 220 zum beanspruchten Verfahren 200, in dem zumindest ein Betriebsparameter vorgegeben wird, der das zu simulierende Betriebsverhalten definiert. Der Betriebsparameter ist das Spektrum des Strahlenbündels 15, die Zusammensetzung 17 der Stoffprobe 16, die das Strahlenbündel 15 emittiert und/oder zumindest eine Position einer Abdeckfläche 32. Ferner umfasst das Verfahren 200 einen dritten Schritt 230, in dem ein nicht näher gezeigten Simulationsprogrammprodukt 70 ausgeführt wird. Das Simulationsprogrammprodukt 70 ist dazu ausgebildet, anhand des Betriebsparameters und des Datensatzes zumindest einen Leistungsparameter der optischen Filteranordnung 30 zu ermitteln. Der Leistungsparameter ist hierbei das Gesamttransmissionsspektrum 20, das sich mit seiner Intensitätsverteilung 41 einstellt, wenn das Strahlenbündel 15 auf das Filter 10 bei der gegebenen Position zumindest einer Abdeckfläche 32 einstellt. Ferner gehört ein vierter Schritt 240 zum beanspruchten Verfahren 200, bei dem der ermittelte Leistungsparameter, also das sich ergebende Gesamttransmissionsspektrum 20, über eine graphische Benutzeroberfläche 72 an einen Benutzer und/oder eine Datenschnittstelle 74 ausgegeben. Das Verfahren 200 ist mit reduziertem Rechenaufwand umsetzbar und dadurch zum Überwachen der optischen Filteranordnung 30 geeignet, insbesondere zu einer Überwachung in Echtzeit.

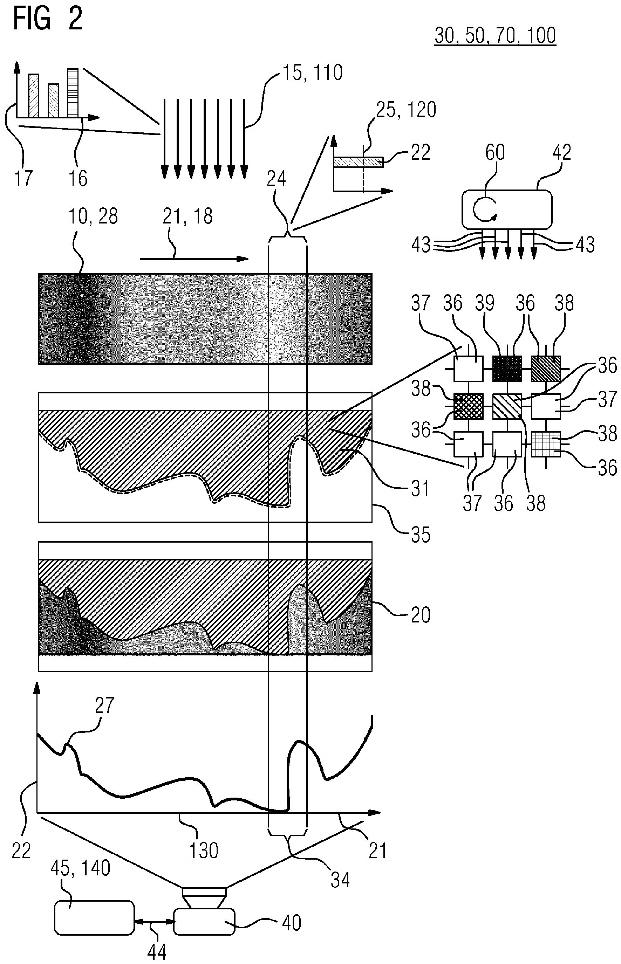

Eine zweite Ausführungsform der beanspruchten optischen Filteranordnung 30 ist in FIG 2 abgebildet. Ebenso ist eine Ausführungsform des beanspruchten Verfahrens 100 zum Betreiben einer solchen optischen Filteranordnung 30, also ein Betriebsverfahren 100, schematisch gezeigt. Die optische Filteranordnung 30 umfasst ein Filter 10, das als linearvariables Filter 28 ausgebildet ist. Das Filter 10 ist im Wesentlichen rechteckig ausgebildet und weist entlang einer seiner Kanten betrachtet ein variables Teiltransmissionsspektrum 18 auf. In FIG 1 ist das linearvariable Filter 28 von links nach rechts für Teiltransmissionsspektren 18 mit steigender Wellenlänge 21 transparent. Das Filter 10 ist mit einem Display 35 versehen, das eine Mehrzahl an Pixeln 36 aufweist, die als Verschattungsmittel 31 dienen. Die Pixel 36 sind jeweils gestuft oder stufenlos über eine Steuereinheit 42 schaltbar. Die Pixel 36 sind jeweils zwischen einem transparenten Zustand 37 und einem intransparenten Zustand 39 schaltbar. Ebenso sind die Pixel 36 jeweils in vorgebbarem Grad in einen teiltransparenten Zustand 38 schaltbar. Die Pixel 26 sind ferner unabhängig über Schaltsignale 43 von der Steuereinheit 42 ansteuerbar. Hierzu ist die Steuereinheit 42 mit einem geeignet ausgebildeten Computerprogrammprodukt 60 ausgestattet. Die optische Filteranordnung 30 gehört zu einem Messgerät 50, zu dem auch ein Detektor 40 gehört, der mit der optischen Filteranordnung 30 zusammenwirkt.

Die optische Filteranordnung 30 gemäß FIG 2 ist mittels eines beanspruchten Verfahrens 100 einstellbar. Das Verfahren 100, also das Betriebsverfahren 100, geht von einem ersten Schritt 110 aus, in dem die optische Filteranordnung 30 in einem funktionstüchtigen Zustand bereitgestellt wird. Weiter wird eine Stoffprobe 16 mit einer Lichtquelle bestrahlt, so dass diese ein Strahlenbündel 16 emittiert. Das Strahlenbündel 15, also seine spektrale Zusammensetzung, ist charakteristisch für dessen Zusammensetzung 17. Das Strahlenbündel 15, das im ersten Schritt 110 emittiert wird, fällt auf das Filter 10. In einem zweiten Schritt 120 wird durch einen Benutzer und/oder eine Künstliche Intelligenz eine Soll-Intensität 25 für ein Teilspektrum 24 des Strahlenbündels 15 vorgegeben. Die vorliegende Intensität 22 ist im entsprechenden Teilspektrum 24 höher als die Soll-Intensität 25. Die vorliegende Intensität 22 wird ermittelt und mit der Soll-Intensität 25 verglichen. Ferner wird im zweiten Schritt 120 für mehrere Pixel 26 eines Displays 35 ein Schaltsignal 43 ermittelt, mit dem deren jeweiliger Transparenzgrad vorgegeben wird. Zumindest im Bereich des Teilspektrums 24 des Strahlenbündels 15 wird eine Mehrzahl an Pixeln 36 intransparent geschaltet und somit die transparente Fläche im Bereich des Teilspektrums 24 reduziert. Das Ermitteln der Schaltbefehle 43 und erfolgt mittels eines Computerprogrammprodukts 60, das auf der Steuereinheit 42 ausführbar gespeichert ist. Durch das Intransparent-Schalten der Mehrzahl an Pixeln 36 ergibt sich für das Filter 10 ein Gesamttransmissionsspektrum 20, das im Bereich unterschiedlicher Wellenlängen 21 in unterschiedlichen Maß in puncto Intensität 22 verringert ist.

Ebenso gehört ein dritter Schritt 130 zum beanspruchten Verfahren 100, in dem ein Teiltransmissionsspektrum 34 des Filters 10 erfasst wird. Das erfasste Teiltransmissionsspektrum 34 überlappt sich in puncto Wellenlänge 21 mit dem Teilspektrum 24 des Strahlenbündels 15. Das Erfassen des Teiltransmissionsspektrums 34 erfolgt mittels des Detektors 40. Das Gesamttransmissionsspektrum 20 stellt in der Erfassung durch den Detektor 40 im Wesentlichen eine Intensitäts-Kennlinie 27 dar, die für jede Wellenlänge 21 des Gesamttransmissionsspektrums 20 eine Intensität 22 aufweist.

Des Weiteren wird in einem vierten Schritt 140 des beanspruchten Verfahrens 100 anhand des erfassten Teiltransmissionsspektrums 34 eine physikalische oder chemische Größe der Stoffprobe 16 erfasst. Beispielsweise wird mittels des erfassten Teiltransmissionsspektrums 34 des Filters 10 eine Konzentration einer Komponente in der Zusammensetzung 17 der Stoffprobe 16 ermittelt. Der vierte Schritt 140 wird mittels einer Auswertungseinheit 45 durchgeführt, die über eine kommunikative Datenverbindung 44 mit dem Detektor 40 gekoppelt ist. Die Auswertungseinheit 44 kann funktionell Teil der Steuereinheit 42 sein oder umgekehrt. Insgesamt ist das beanspruchte Verfahren 100 mittels des Computerprogrammprodukts 60 durchführbar, das auf der Steuereinheit 42 ausführbar gespeichert ist. Mittels des beanspruchten Verfahrens 100 ist das Display 35, und damit die optische Filteranordnung 30, an unterschiedliche Spektren von Strahlenbündeln 15 insoweit anpassbar, dass die Intensität 22 in einem zu untersuchenden Teilspektrum 24 des Strahlenbündels 15 an das Erfassungsvermögen des Detektors 40 anpassbar ist. Das Teilspektrum 24 ist hierbei im Wesentlichen frei vorgebbar. Dementsprechend ist ein einziger Detektor 40 für eine Auswertung einer breiten Spanne an möglichen Strahlenbündeln 15, und damit unterschiedlichen Stoffproben 16 geeignet. Dadurch, dass das Display 20 über im Wesentlichen das vollständige Gesamttransmissionsspektrum 20 des Filters 10 vorgebbar transparent, teil-transparent oder intransparent schaltbar ist, ist auch eine Mehrzahl an Teilspektren 24 des Strahlenbündels 15 als separates Teiltransmissionsspektrum 34 einstellbar. Dadurch ist eine Mehrzahl an physikalischen oder chemischen Größen der Stoffprobe 16 im Wesentlichen gleichzeitig ermittelbar. Die optische Filteranordnung 30 ist durch ein nicht näher gezeigtes Simulationsprogrammprodukt 70 abgebildet und ist dazu ausgebildet, das Betriebsverhalten der optischen Filteranordnung 30, das während des beschriebenen Verfahrens 100 vorliegt, nachzustellen. Das Simulationsprogrammprodukt 70 ist hierbei als Digitaler Zwilling der optischen Filteranordnung 30 ausgebildet.

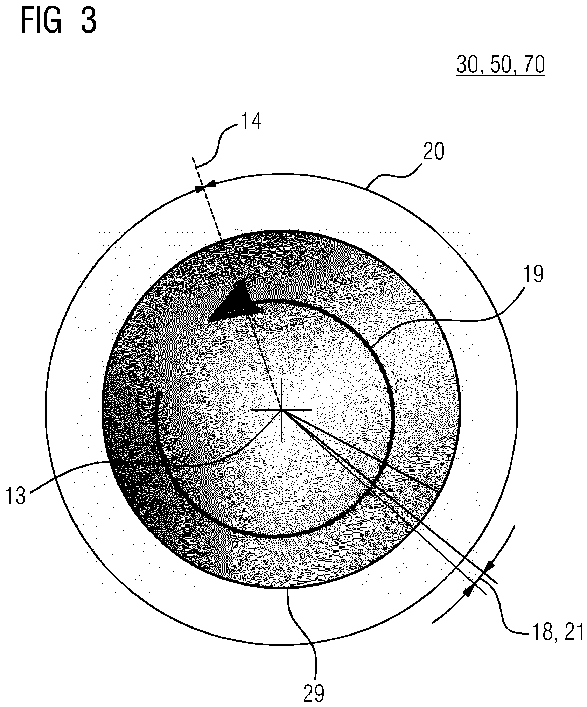

Ein Filter 10 gemäß einer dritten Ausführungsform der beanspruchten optischen Filteranordnung 30 ist in FIG 3 schematisch dargestellt. Das Filter 10 ist im Wesentlichen kreisförmig ausgebildet und weist entlang einer Umlaufrichtung 19 ein veränderliches Teiltransmissionsspektrum 18 auf. Entlang der Umlaufrichtung 19 ist das Filter 10 für eine kontinuierlich steigende Wellenlänge 21 transparent. Grenzen 14 eines so gebildeten Gesamttransmissionsspektrums 20 bilden auf dem Filter 10 eine Radiallinie, ab dessen Mittelpunkt 13. Insgesamt bildet das Filter 10 ein sogenanntes zirkularvariables Filter 29. Das zirkularvariable Filter 29 ist analog einem Segmentfilter 26 wie in FIG 1 einsetzbar. Weiter alternativ oder ergänzend kann das zirkularvariable Filter 29 auch mit einem korrespondierend ausgebildeten Display 25 wie in FIG 2 kombiniert werden. Das zirkularvariable Filter 29 ist in einer optischen Filteranordnung 30 einsetzbar, die zu einem Messgerät 50 gehört. Ferner ist das zirkularvariable Filter 29 in einem zugehörigen Simulationsprogrammprodukt 70 abgebildet, mit dem dessen Betriebsverhalten nachstellbar ist.

## Patentansprüche

1. Optische Filteranordnung (30) zum Filtern eines einfallenden Strahlenbündels (15), umfassend ein Filter (10), das als ein über einem Spektrum variables Bandpassfilter ausgebildet ist, und das mit zumindest einem Verschattungsmittel (31) ausgestattet ist, **dadurch gekennzeichnet, dass** das Verschattungsmittel (31) zu einem Einstellen eines Gesamttransmissionsspektrums (20) des Filters (10) dazu ausgebildet ist, zumindest einen Abschnitt des Filters (10) vorgebbar optisch zu verschatten und/oder intransparent zu schalten.

2. Optische Filteranordnung (30) nach Anspruch 1, **dadurch gekennzeichnet, dass** das Verschattungsmittel (31) als bewegliche Abdeckfläche (32) ausgebildet ist, die in einem Strahlengang des Strahlenbündels (15) vorgebbar positionierbar ist.

3. Optische Filteranordnung (30) nach Anspruch 1 oder 2, **dadurch gekennzeichnet, dass** das Verschattungsmittel (31) als Display (35) ausgebildet ist, dessen Pixel (36) jeweils vorgebbar transparent, teiltransparent oder intransparent schaltbar sind.

4. Optische Filteranordnung (30) nach einem der Ansprüche 1 bis 3, **dadurch gekennzeichnet, dass** das Filter (10) eine Mehrzahl an umlaufend angeordneten Filterelementen (12, 12.1, 12.2, 12.3) umfasst, die jeweils ein unterschiedliches Teiltransmissionsspektrum (34) aufweisen.

5. Optische Filteranordnung (30) nach einem der Ansprüche 1 bis 3, **dadurch gekennzeichnet, dass** das Filter (10) zumindest abschnittsweise als kontinuierlich variables Bandpassfilter ausgebildet ist.

6. Optische Filteranordnung (30) nach Anspruch 5, **dadurch gekennzeichnet, dass** das kontinuierlich variable Bandpassfilter als linearvariables Bandpassfilter (28) oder als zirkularvariables Bandpassfilter (29) ausgebildet ist.

7. Optische Filteranordnung (30) nach einem der Ansprüche 1 bis 6, **dadurch gekennzeichnet, dass** die optische Filteranordnung (30) mit einem Polarisationsfilter versehen ist.

8. Verfahren (100) zum Ermitteln einer physikalischen oder chemischen Größe einer Stoffprobe (16) mittels einer optischen Filteranordnung (30), umfassend die Schritte:
a) Bestrahlen der Stoffprobe (16) mit einer Lichtquelle und Erzeugen eines Strahlenbündels (15), das von der bestrahlten Stoffprobe (16) emittiert wird;
b) Vorgeben einer Soll-Intensität (25) für zumindest ein Teilspektrum (24) des Strahlenbündels (15) und Ausgeben eines Schaltsignals (43) an zumindest ein Pixel (36) zum Vorgeben dessen Transparenzgrads;
c) Erfassen zumindest eines Teiltransmissionsspektrums (34), das zumindest teilweise mit dem Teilspektrums (24) aus Schritt b) überlappt;
d) Ermitteln der physikalischen oder chemischen Größe der Stoffprobe (16) anhand zumindest des Teiltransmissionsspektrums (34).

9. Verfahren (100) nach Anspruch 8, **dadurch gekennzeichnet, dass** das Verfahren (100) mittels einer optischen Filteranordnung (30) nach einem der Ansprüche 1 bis 7 durchgeführt wird.

10. Verfahren (100) nach Anspruch 8 oder 9, **dadurch gekennzeichnet, dass** das zumindest eine Pixel (36) mit einer vorgebbaren Taktung in Schritt b) geschaltet wird.

11. Verfahren (100) nach einem der Ansprüche 8 bis 10, **dadurch gekennzeichnet, dass** durch ein spaltenweises und/oder zeilenweises intransparent, transparent, teil-transparent oder teil-intransparent Schalten einer Mehrzahl an Pixel (26) ein beweglicher Suchbereich vorgegeben wird.

12. Verfahren (100) nach einem der Ansprüche 8 bis 11, **dadurch gekennzeichnet, dass** die Schritte b), c) und d) für eine Mehrzahl an vorgebbaren Teilspektren (24) mit je einer Soll-Intensität (25) wiederholt durchgeführt werden.

13. Computerprogrammprodukt (60) zum Ansteuern einer optischen Filtervorrichtung (30) mit einem Filter (10), das dazu ausgebildet ist, Schaltsignale (43) zum Betätigen eines Verschattungsmittels (31) im Strahlengang der optischen Filtervorrichtung (30) zu ermitteln und auszugeben, **dadurch gekennzeichnet, dass** das Computerprogrammprodukt (60) dazu ausgebildet ist, ein Verfahren (100) nach einem der Ansprüche 8 bis 12 durchzuführen.

14. Messgerät (50), umfassend einen Detektor (40) und eine optische Filteranordnung (30), die mit einer Auswertungseinheit (45) gekoppelt ist, **dadurch gekennzeichnet, dass** die optische Filteranordnung (30) nach einem der Ansprüche 1 bis 7 ausgebildet ist und/oder die Auswertungseinheit (45) mit einem Computerprogrammprodukt (60) nach Anspruch 13 ausgestattet ist.

15. Verfahren (200) zum Simulieren eines Betriebsverhaltens einer optischen Filteranordnung (30), umfassend die Schritte:
a) Bereitstellen eines Datensatzes, der zumindest teilweise eine Funktionsweise zumindest eines Abschnitts der zu simulierenden optischen Filteranordnung (30) nachstellt;
b) Vorgeben zumindest eines Betriebsparameters, durch den das zu simulierende Betriebsverhalten definiert;
c) Ausführen eines Simulationsprogrammprodukts (70), das dazu ausgebildet ist, anhand des Datensatzes und des zumindest einen Betriebsparameters zumindest einen Leistungsparameter der optischen Filteranordnung (30) zu ermitteln;
d) Ausgeben des ermittelten Leistungsparameters an einen Benutzer und/oder eine Datenschnittstelle (74);
**dadurch gekennzeichnet, dass** die optische Filteranordnung (30) nach einem der Ansprüche 1 bis 7 und/oder zum Nachstellen eines Verfahrens (100) nach einem der Ansprüche 8 bis 12 ausgebildet ist.

16. Simulationsprogrammprodukt (70) zum Simulieren eines Betriebsverhaltens einer optischen Filteranordnung (30), **dadurch gekennzeichnet, dass** das Simulationsprogrammprodukt (70) dazu ausgebildet ist, ein Verfahren (200) nach Anspruch 15 auszuführen und/oder dazu ausgebildet ist, ein Verfahren (100) nach einem der Ansprüche 7 bis 12 nachzustellen.
